# EUROPÄISCHE PATENTSCHRIFT

(11) **EP 2 602 083 B1**
(45) Veröffentlichungstag und Bekanntmachung des Hinweises auf die Patenterteilung: **05.10.2016**
(21) Anmeldenummer: 12195053.9
(22) Anmeldetag: 30.11.2012
(51) Int. Cl.: B29C 37/00, B29C 45/14, B29C 70/78, B32B 7/08, B32B 15/08

(54) **Mehrschichtverbundeinheit**
Multiple layer composite unit
Unité composite multicouche

(30) Priorität: 09.12.2011 DE 102011088085
(43) Veröffentlichungstag der Anmeldung: 12.06.2013
(73) Patentinhaber: BSH Hausgeräte GmbH, 81739 München (DE)
(72) Erfinder: Osenstätter, Anton, 83278 Traunstein (DE); Schmidmayer, Gerhard, 83093 Bad Endorf (DE)

(56) Entgegenhaltungen:
- EP-A2- 0 192 162
- EP-A2- 0 902 210
- DE-A1- 10 057 187
- DE-A1- 10 117 128
- DE-B3-102005 045 178
- FR-A1- 2 656 827
- GB-A- 2 414 213
- US-A1- 2010 215 938

## Beschreibung

Die Erfindung bezieht sich auf eine Mehrschichtverbundeinheit, bestehend aus mindestens einem eine jeweils erste Schicht bildenden Form fest vorgefertigten und mit einer eigentümlichen Außenfläche versehenen, vorzugsweise metallischen Bauelement und mit mindestens einem in liquider Beschaffenheit auf das Bauelement aufgebrachten weiteren Schicht, vorzugsweise aus einem fließfähigen Kunststoff, wobei zum Zwecke der Haftung zwischen diesen Schichten Haftungsmittel vorgesehen sind.

Bekannte Verbindungstechniken zur innigen und verbundfesten Verbindung von Metallteilen mit fließfähigen Kunststoffkomponenten sehen vor, dass der zu beschichtende Metallteil mechanisch oder chemisch zur Schaffung einer gewissen Formschlüssigkeit als Haftungsmittel zwischen Metall und Kunststoff aufgerauht wird oder mit einem chemischen Haftungsmittel z. B. einem Haftprimer versehen wird. In der Praxis hat sich gezeigt, dass solche Verbindungen oft, z. B. großen Querkräften zwischen Metallteil und Kunststoffteil nicht verzugsfrei standhalten können, bei großflächigen Verbindungen auch aufgrund unterschiedlichen thermischen Ausdehnungsverhaltens (Bimetall-Effekt) der unterschiedlichen Materialien bei Verwendung der Verbindungsstelle in höheren Temperaturbereichen.

So beschreibt die US 2010/0215938 A1 eine Methode, mit der an einer Metallkomponente eines Mobiltelefons gezielt Plastikkomponenten angebracht werden können. Dabei werden an der Metallkomponente angebrachte Laschen mit Plastik umgossen, so dass eine dauerhafte Verbindung zwischen der Metallkomponente und dem Kunststoffteil entsteht.
Die DE 101 17 128 A1 betrifft ein Verfahren zur Herstellung von Verbundaufbauten zwischen metallischen und nicht metallischen Materialien, wobei auf einer Oberfläche eines metallischen Grundkörpers eine Haftschicht aus einzelnen, aufgeschweißten Rivets aufgebracht wird. Die FR 90 00220 A1 beschreibt ein Verfahren, bei welchem eine mechanische Spannung zwischen einem Trägersubstrat und einer aufgebrachten Plastikschicht vermieden wird, indem Verbindungs- bzw. Befestigungskomponenten beweglich gelagert sind. Die EP 0 902 210 A2 beschreibt eine Scheibenbremse mit einem Belagträger und einem Reibbelag, der mit einer Schraube, mit einer Niete oder mit mit einem Außengewinde versehenen Schweißbolzen an dem Belagträger befestigt wird.

Die EP 0 192 162 A2 betrifft ein Keramikmetallkomposit mit einer Keramikschicht welche mechanisch mit einer Metallschicht verbunden ist. Die mechanische Verbindung wird hier über eine Matrix erzielt, welche mit der Metallschicht verbunden ist, eine Vielzahl von Formen annehmen kann und in welche die Keramik eingegossen wird. Die DE 100 57 187 A1 betrifft ein Verfahren für die Herstellung von Verbundaufbauten zwischen metallischen und nicht metallischen Materialien bei dem auf einer Oberfläche eines metallischen Grundkörpers eine Haftschicht aus einzelnen Schweißpunkten bzw. Ankerpunkten aufgebracht wird. Die GB 2 414 213 beschreibt eine Sandwichstruktur mit zwei äußeren Metallplatten und einem Plastik- oder Polymerkern. Dabei ragen Bolzen, welche mit den Metallplatten verbunden sind in den Kunststoff hinein.

Der vorliegenden Erfindung liegt die Aufgabe zugrunde, eine Mehrschichtbundeinheit zu schaffen, bei der insbesondere der Kunststoffteil, z. B. als tragendes Element gegenüber der eine eigentümliche, designerisch gestaltetete und augenfällige Außenfläche aufweisenden ersten Schicht besonderen Belastungskräften, z. B. Querkräften ausgesetzt ist, denen die Materialverbindung bestmöglich bei optimaler Verbundfestigkeit standhalten soll.

Diese Aufgabe wird erfindungsgemäß dadurch gelöst, dass zwischen den Schichten einerseits formschlüssig in die liquide aufgebrachte Schicht eingebettete und andererseits mit dem Bauelement unmittelbar verbundene separate Verbindungselemente vorgesehen sind.

Durch die Verbindungselemente werden zwischen den miteinander zu verbindenden Schichten formschlüssige, in Form von in der Fachsprache "Hinterschnitt" genannte Verbindungen geschaffen, die einen durch Belastung, z. B. durch Querkräfte zwischen den Schichten und/oder durch thermische Einflüsse bedingten, zu vermeidenden Verzug zwischen den Schichten verhindern.

Das Verbindungselement weist als Formteil, vorzugsweise aus Metallblech oder Metallfolie, einen Verbindungsteil für die Verbindung mit dem Bauelement und einen von diesem Verbindungsteil abstehenden, in die weitere Schicht formschlüssig hineinragenden Formschlussteil auf. Die Formgebung des mit der z. B. aus Kunststoff bestehenden weiteren Schicht verbundenen Formschlussteils ist abhängig von den zu erwartenden Verzugskräften und weist eine eckige, z. B. dreieckige, oder eine verrundete Kontur auf.

Eine bevorzugte, materialschlüssige und damit besonders verbundfeste Verbindung zwischen den Schichten wird dadurch erreicht, dass das metallische Verbindungselement am Verbindungsteil durch einen Schweißvorgang, insbesondere durch Laserschweißen mit dem metallischen Bauelement verbunden ist

In Ergänzung der formschlüssigen Verbindung zwischen der Mehrschichtverbundeinheit, die selbstverständlich nicht auf die Verbindung von nur zwei Schichten beschränkt ist, kann erfindungsgemäß vorgesehen sein, dass die Schichten einerseits großflächig durch Haftungsmittel, z. B. durch Klebemittel und andererseits durch vereinzelt angeordnete Verbindungselemente miteinander verbunden sind.

Alternativ zur vorgenannten technologischen Gestaltung kann es vorteilhaft sein, wenn das Bauelement nur partiell, z. B. inselartig mit der weiteren, jeweils ein Verbindungselement enthaltenden Schicht versehen ist. Dadurch kann eine verzugsfeste Verbindung auch zwischen mehrfachen diskreten Schichteneinheiten geschaffen werden und insbesondere bei großflächigen Schichteinheiten werden durch die Vermeidung des Bimetalleffektes eine erhebliche Verzugsminimierung zwischen der Verbundschichtung, z. B. Metall und Kunststoff aufgrund der unterschiedlichen Ausdehnungsverhalten erhalten.

Die Eintauchtiefe der Verbindungselemente in die Kunststoffschicht wird idealerweise der Schichtdicke der Kunststoffschicht entsprechen, jedoch kann bei extrem geforderter Verzugsfestigkeit eine partielle Erweiterung des Formschlussteils des jeweiligen Verbindungselements vorgesehen werden, wozu gemäß einer weiteren Ausgestaltung der Erfindung die weitere Schicht im Bereich der Verbindungselemente eine gegenüber deren übrigen Schichtdicke größere Schichtdicke für die Aufnahme von die übrige Schichtdicke überragende Verbindungselemente aufweist.

Eine in jedweder Richtung wirksame Verzugsfestigkeit wird erfindungsgemäß dadurch erreicht, dass der Formschlussteil innerhalb seiner Kontur den Formschluss mit der weiteren Schicht begünstigende integrale Formschlusskanten, vorzugsweise in Form von Materialdurchbrechungen aufweist.

Die Erfindung ist anhand von in der Zeichnung dargestellten Ausführungsbeispielen nachstehend erläutert.

Es zeigt:
- Fig. 1: eine als einzelnes Paneel ausgebildete Mehrschichtverbundeinheit in zwei unterschiedlichen Ausführungsformen,
- Fig. 2, 3 und 4: verschiedene Ausführungsformen von Verbindungselementen.

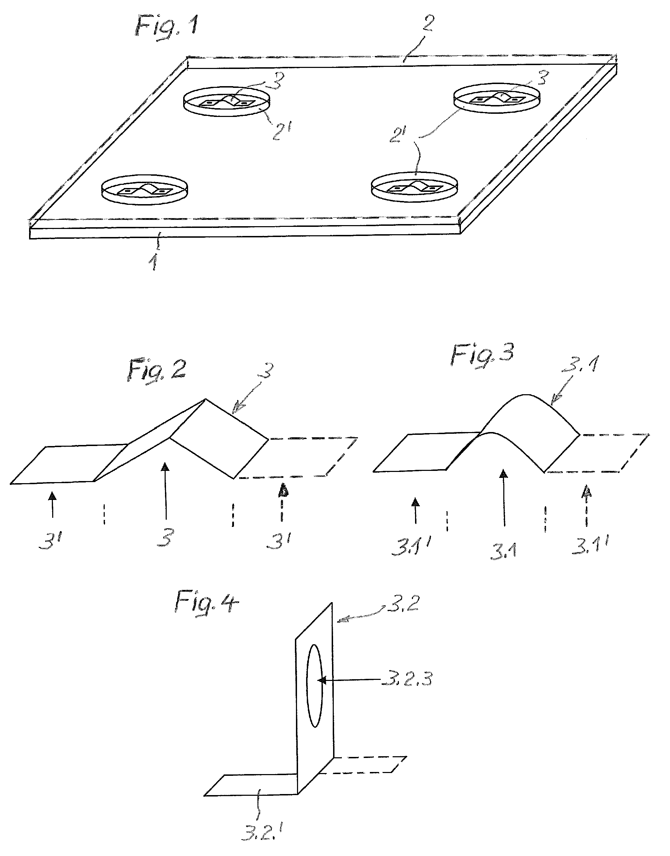

Fig. 1 zeigt ein rechteckiges Paneel, z. B. als Teil einer Bedienfront etwa eines Backofens, das als Mehrschichtverbundeinheit ausgebildet ist und im Beispiel aus zwei miteinander innig verbundenen Schichten besteht, nämlich aus einer vorgefertigten metallischen Schicht, nachstehen Bauelement 1 genannt, dessen frontseitige bzw. außenseitige Oberfläche designerisch eigentümlich gestaltet ist, z. B. mit Markierungen, Schriftzeichen oder dergleichen versehen ist, sowie aus einer gestrichelt angedeuteten bzw. mehreren Schichten 2, 2' bestehend aus einem fließfähigen, auf die Rückseite des Bauelements 1 in liquider Form aufgebrachten Kunststoff.

Die weitere Schicht 2 überdeckt das gesamte Bauelement 1, während die vereinzelten, inselartig auf der Oberfläche des Bauelements 1 aufgebrachten weiteren Schichten 2' nur einen Teil der vorgenannten Oberfläche überdecken. Beide Schichten 2, 2' können in fachlich bekannter Weise mit dem Bauelement 1 verbunden sein, z. B. durch ein Klebematerial oder durch eine formschlüssige Verbindung, indem die Verbindungsseite des Bauelements 1 eine aufgerauhte Verbindungsfläche aufweist, die sich mit dem aufgebrachten Kunststoffmaterial formmäßig verbindet.

Eine besondere Problematik bezüglich der mechanischen Verbindung des Bauelements 1 mit der einen oder anderen Schicht 2, 2' besteht darin, dass entweder durch thermische Einflüsse in Folge unterschiedlichen Ausdehnungsverhaltens der Schichten/Bauelement oder aber in Folge von mechanisch bedingten Kräften/Querkräften zwischen den Schichten Verzugskräfte wirksam werden, die bei konventioneller Verbindung mittels Oberflächenformschluss oder Klebeverbindung ein Abheben, d. h. Auflösung des Formschlusses und/oder eine Querverschiebung der Schichten gegeneinander bewirken können. So können beispielsweise die Schichten 2, 2' tragende Elemente sein für die Befestigung der Mehrschichtverbundeinheit mit einem ortsfesten Geräterahmen oder Gerätegehäuse, wodurch sich in unterschiedlichen Wirkungsrichtungen mechanische Kräfte oder Spannungen auf die Mehrschichtverbundeinheit auswirken können.

Um dies zu vermeiden, sind zwischen den Schichten/Bauelement 1 / 2, 2' separate, d. h. als Einzelteile hinzugefügte Verbindungselemente 3, 3.1, 3.2 vorgesehen, die z. B. zusätzlich zu der konventionellen Haftungsverbindung eine zusätzliche Formschlussverbindung zwischen den miteinander zu verbindenden Schichten schaffen.

Derartige Verbindungselemente sind in den Fig. 2 bis 4 dargestellt. Das aus Metallblech oder Metallfolie bestehende Verbindungselement 3 gemäß Fig. 1 und 2 ist winkelig gebogen und besitzt einerseits oder, gestrichelt dargestellt, beiderseits Verbindungsteile 3', die durch einen Schweißvorgang z. B. mittels Laserschweißung mit dem metallischen Bauelement 1 verbunden werden. Das die Verbindungsteile 3' überragende Verbindungselement 3 verbindet sich formschlüssig mit der Kunststoffschicht 2.

Beim Ausführungsbeispiel gemäß Fig. 3 ist das Verbindungselement 3.1 verrundet ausgebildet und besitzt ebenfalls Verbindungsteile 3.1' einseitig oder beidseitig.

Das Verbindungselement 3.2 gemäß Fig. 4 ist in Form eines plan in die weitere Schicht 2 ragendes Teil ausgebildet und ist ebenfalls mit einem oder mehreren Verbindungsteilen 3.2' verbunden. Es besitzt eine Materialdurchbrechung 3.2.3 in Form einer Bohrung innerhalb seiner Kontur, wodurch durch integrale Formschlusskanten (Verbindungselement - Kontur- und Materialdurchbrechung) in jeder Richtung ein Formschluss der weiteren Schicht 2 gegenüber dem Bauelement 1 erhalten wird.

In Abhängigkeit von der geforderten Verzugsfestigkeit kann vorgesehen sein, dass die Verbindungselemente die normale vorbestimmte weitere Schichtdicke überragen und an diesen Stellen die weitere Schicht 2 eine größere Schichtdicke aufweist.

## Patentansprüche

1. Hausgerät mit einem Paneel, das als Mehrschichtverbundeinheit ausgebildet ist, bestehend aus mindestens einem eine jeweils erste Schicht (1) bildenden formfest vorgefertigten und mit einer eigentümlichen Außenfläche versehenen, vorzugsweise metallischen Bauelement (1) und mit mindestens einer in liquider Beschaffenheit auf das Bauelement (1) aufgebrachten weiteren Schicht (2, 2'), vorzugsweise aus einem fließfähigen Kunststoff, wobei
- die Schichten fest miteinander verbunden sind,
- die weitere Schicht (2) das gesamte Bauelement 1 überdeckt
- zwischen den Schichten (1; 2, 2') einerseits formschlüssig in die liquide aufgebrachte Schicht (2, 2') eingebettete und andererseits mit dem Bauelement (1) unmittelbar verbundene separate Verbindungselemente (3,3.1, 3.2) vorgesehen sind,
- das Verbindungselement (3, 3.1, 3,2) als Formteil, vorzugsweise aus Metallblech oder Metallfolie, einen Verbindungsteil (3', 3.1', 3.2') für die Verbindung mit dem Bauelement (1) und einen vom Verbindungsteil (3', 3.1', 3.2') abstehenden, in die weitere Schicht (2, 2') formschlüssig hineinragenden Formschlussteil aufweist,- das Formschlussteil des Verbindungselements (3, 3.1, 3.2) eine eckige, z. B. dreieckige, oder eine verrundete Kontur aufweist, und
- sich an die Kontur des Formschlussteils mehrere Verbindungsteile (3', 3.1', 3.2') anschließen.

2. Hausgerät mit einer Mehrschichtverbundeinheit nach einem der vorhergehenden Ansprüche, **dadurch gekennzeichnet, dass** das metallische Verbindungselement (3, 3.1, 3.2) am Verbindungsteil (3', 3.1', 3.2') durch einen Schweißvorgang, insbesondere durch Laserschweißen mit dem metallischen Bauelement (1) verbunden ist.

3. Hausgerät mit einer Mehrschichtverbundeinheit nach einem der vorhergehenden Ansprüche, **dadurch gekennzeichnet, dass** das Bauelement (1) nur partiell, z. B. inselartig mit einer weiteren, jeweils ein Verbindungselement bzw. Formschlußteil (3, 3.1, 3.2) enthaltenden Schicht (2') versehen ist.

4. Hausgerät mit einer Mehrschichtverbundeinheit nach einem der vorhergehenden Ansprüche, **dadurch gekennzeichnet, dass** die Schichten (1, 2, 2') einerseits großflächig durch Haftungsmittel, z. B. durch Klebemittel und anderseits durch vereinzelt angeordnete Verbindungselemente (3, 3.1, 3.2) miteinander verbunden sind.

5. Hausgerät mit einer Mehrschichtverbundeinheit nach einem der vorhergehenden Ansprüche, **dadurch gekennzeichnet, dass** die weitere Schicht (2, 2') im Bereich der Verbindungselemente (3, 3.1, 3.2) eine gegenüber deren übrigen Schichtdicke größere Schichtdicke für die Aufnahme von die übrige Schichtdicke überragende Verbindungselemente aufweist.

6. Hausgerät mit einer Mehrschichtverbundeinheit nach einem der vorherigen Ansprüche, **dadurch gekennzeichnet, dass** der Formschlussteil des Verbindungselements (3, 3.1, 3.2) eine dreieckige Kontur aufweist.

7. Hausgerät mit einer Mehrschichtverbundeinheit nach einem der vorhergehenden Ansprüche, **dadurch gekennzeichnet, dass** der Formschlussteil innerhalb seiner Kontur integrale Formschlusskanten, vorzugsweise in Form von Materialdurchbrechungen (3.2.3) aufweist.

8. Hausgerät nach einem der vorhergehenden Ansprüche, **dadurch gekennzeichnet, dass** die Mehrschichtverbundeinheit Bestandteil einer Bedienfront des Hausgeräts ist.

## Claims

1. Domestic appliance with a panel which is embodied as a multiple layer composite unit, consisting of at least one preferably metallic component (1) prefabricated to be rigid and to form a first layer (1) and provided with a specific outer surface in each case and with at least one further layer (2, 2'), preferably made of a free-flowing plastic, applied in liquid form onto the component (1), wherein
- the layers are permanently connected to one another,
- the further layer (2) covers the entire component 1
- provision is made between the layers (1; 2, 2') for separate connecting elements (3, 3.1, 3.2) embedded on the one hand in a form-fit manner into the applied liquid layer (2, 2') and on the other hand connected directly to the component (1),
- the connecting element (3, 3.1, 3.2), as a moulded part, preferably made of sheet metal or metal film, has a connecting part (3', 3.1', 3.2') for connection with the component (1) and a form-closure part which projects from the connecting part (3', 3.1', 3.2') and protrudes in a form-fit manner into the further layer (2, 2'),
- the form-closure part of the connecting element (3, 3.1, 3.2) has an angular, e.g. triangular, or a rounded contour, and
- a number of connecting parts (3', 3.1', 3.2') are connected to the contour of the form-closure part.

2. Domestic appliance with a multiple layer composite unit according to one of the preceding claims, **characterised in that** the metallic connecting element (3, 3.1, 3.2) on the connecting part (3', 3.1', 3.2') is connected by means of a welding process, in particular by means of laser welding, to the metallic component (1).

3. Domestic appliance with a multiple layer composite unit according to one of the preceding claims, **characterised in that** the component (1) is only provided partially, e.g. insularly, with a further layer (2') containing a connecting element or form-closure part (3, 3.1, 3.2) in each case.

4. Domestic appliance with a multiple layer composite unit according to one of the preceding claims, **characterised in that** the layers (1, 2, 2') are connected to one another on the one hand over a large area by adhesive agents, e.g. by adhesives and on the other hand by sporadically arranged connecting elements (3, 3.1, 3.2).

5. Domestic appliance with a multiple layer composite unit according to one of the preceding claims, **characterised in that** by comparison with its remaining layer thickness, the further layer (2, 2') has a larger layer thickness in the region of the connecting elements (3, 3.1, 3.2) for receiving connecting elements protruding from the remaining layer thickness.

6. Domestic appliance with a multiple layer composite unit according to one of the preceding claims, **characterised in that** the form-closure part of the connecting element (3, 3.1, 3.2) has a triangular contour.

7. Domestic appliance with a multiple layer composite unit according to one of the preceding claims, **characterised in that** within its contour the form-closure part has integral form-closure edges, preferably in the form of material through-holes (3.2.3).

8. Domestic appliance according to one of the preceding claims, **characterised in that** the multiple layer composite unit is a component of a front control panel of the domestic appliance.

## Revendications

1. Appareil ménager comprenant un panneau réalisé en tant qu'unité composite multicouche, constitué d'au moins un élément de construction (1) de préférence métallique, formant respectivement une première couche préfabriquée de manière indéformable et muni d'une propre surface extérieure, et d'au moins d'une couche supplémentaire (2, 2') à caractéristique liquide, appliquée sur l'élément de construction (1), de préférence constituée d'une matière plastique fluide,
- les couches étant reliées entre elles de manière fixe,
- la couche supplémentaire (2) recouvrant l'ensemble de l'élément de construction (1)
- des éléments de liaison (3, 3.1, 3.2) séparés étant ménagés entre les couches (1 ; 2, 2') d'une part en étant enrobés avec adhérence de forme dans la couche (2) liquide appliquée et d'autre part en étant directement raccordés à l'élément de construction (1),
- l'élément de liaison (3, 3.1, 3.2) présentant en tant que pièce moulée, de préférence en tôle métallique ou en feuille métallique, une pièce de liaison (3', 3.1', 3.2') pour la liaison avec l'élément de construction (1) et une pièce à adhérence de forme faisant saillie de la pièce de liaison (3', 3.1', 3.2'), rentrant par adhérence de forme dans la couche supplémentaire (2, 2'), - la pièce à adhérence de forme de l'élément de liaison (3, 3.1, 3.2) présentant un contour angulaire, par ex. triangulaire, ou un contour arrondi, et
- plusieurs pièces de liaison (3', 3.1', 3.2') se raccordant au contour de la pièce à adhérence de forme.

2. Appareil ménager comprenant une unité composite multicouche selon l'une quelconque des revendications précédentes, **caractérisé en ce que** l'élément de liaison métallique (3, 3.1, 3.2) sur la pièce de liaison (3', 3.1,', 3.2') est raccordé à l'élément de construction métallique (1) au moyen d'une opération de soudage, notamment par soudage laser.

3. Appareil ménager comprenant une unité composite multicouche selon l'une quelconque des revendications précédentes, **caractérisé en ce que** l'élément de construction (1) est muni seulement partiellement, par ex. en îlots, d'une couche supplémentaire (2') contenant respectivement un élément de liaison resp. une pièce à adhérence de forme (3, 3.1, 3.2).

4. Appareil ménager comprenant une unité composite multicouche selon l'une quelconque des revendications précédentes, **caractérisé en ce que** les couches (1, 2, 2') sont reliées entre elles d'une part sur une grande surface au moyen d'agents adhésifs, par ex. au moyen de colle, et d'autre part au moyen d'éléments de liaison (3, 3.1, 3.2) disposés de manière dispersée.

5. Appareil ménager comprenant une unité composite multicouche selon l'une quelconque des revendications précédentes, **caractérisé en ce que** la couche supplémentaire (2, 2') présente dans la zone des éléments de liaison (3, 3.1, 3.2) une épaisseur de couche plus grande par rapport au reste de son épaisseur de couche pour le logement des éléments de liaison dépassant le reste de l'épaisseur de couche.

6. Appareil ménager comprenant une unité composite multicouche selon l'une quelconque des revendications précédentes, **caractérisé en ce que** la pièce à adhérence de forme de l'élément de liaison (3, 3.1, 3.2) présente un contour triangulaire.

7. Appareil ménager comprenant une unité composite multicouche selon l'une quelconque des revendications précédentes, **caractérisé en ce que** la pièce à adhérence de forme présente à l'intérieur de son contour des bords intégraux à adhérence de forme, de préférence sous forme de perçages de matériau (3.2.3).

8. Appareil ménager selon l'une quelconque des revendications précédentes, **caractérisé en ce que** l'unité composite multicouche fait partie intégrante d'une façade de commande de l'appareil ménager.
